(19) Europäisches Patentamt
European Patent Office
Office européen des brevets

(11) **EP 4 539 192 A1**

(12) **EUROPEAN PATENT APPLICATION**
published in accordance with Art. 153(4) EPC

(43) Date of publication:
**16.04.2025 Bulletin 2025/16**

(21) Application number: **23807842.2**

(22) Date of filing: **12.05.2023**

(51) International Patent Classification (IPC):
***H01M 10/0567*** *(2010.01)* ***H01M 10/052*** *(2010.01)*

(52) Cooperative Patent Classification (CPC):
**H01M 10/052; H01M 10/0567;** Y02E 60/10

(86) International application number:
**PCT/KR2023/006459**

(87) International publication number:
**WO 2023/224322 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.05.2022 KR 20220061629**

(71) Applicants:
- **SK innovation Co., Ltd.**
  **Seoul 03188 (KR)**
- **SK On Co., Ltd.**
  **Seoul 03161 (KR)**

(72) Inventors:
- **SHIM, You Jin**
  **Daejeon 34124 (KR)**
- **SHIM, Yu Na**
  **Daejeon 34124 (KR)**

(74) Representative: **Stolmár & Partner Patentanwälte PartG mbB**
**Blumenstraße 17**
**80331 München (DE)**

# (54) ELECTROLYTE FOR RECHARGEABLE LITHIUM BATTERY AND RECHARGEABLE LITHIUM BATTERY INCLUDING SAME

(57) According to exemplary embodiments, an electrolyte for a lithium secondary battery which includes an additive including a compound represented by a specific formula; an organic solvent; and a lithium salt may be provided. Thereby, the lithium secondary battery including the electrolyte for a lithium secondary battery may provide excellent high-temperature characteristics and other performances (e.g., initial resistance, rapid charge performance, room-temperature capacity characteristics, etc.).

[FIG. 1]

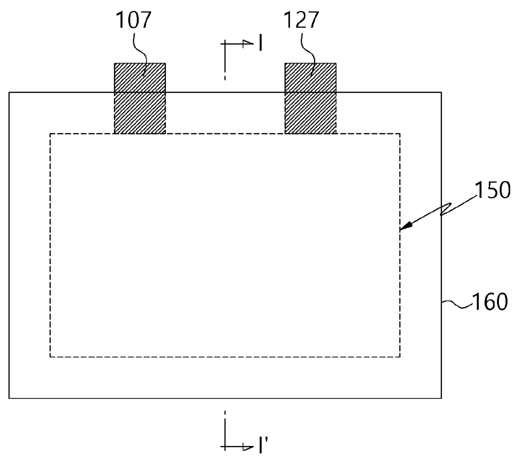


EP 4 539 192 A1

## Description

[Technical Field]

The present disclosure relates to an electrolyte for a lithium secondary battery and a lithium secondary battery including the same, and more specifically, to an electrolyte for a lithium secondary battery which includes a solvent and an electrolyte salt, and a lithium secondary battery including the electrolyte.

[Background Art]

A secondary battery is a battery which can be repeatedly charged and discharged, and has been widely applied to portable electronic devices such as a mobile phone, a laptop computer, etc. as a power source thereof.

A lithium secondary battery has a high operating voltage and a high energy density per unit weight, and is advantageous in terms of a charging speed and light weight. In this regard, the lithium secondary battery has been actively developed and applied to various industrial fields.

For example, the lithium secondary battery may include: an electrode assembly including a cathode, an anode, and a separation membrane interposed between the cathode and the anode; and an electrolyte in which the electrode assembly is impregnated in a case.

As an active material for the cathode of the lithium secondary battery, a lithium metal oxide may be used. Examples of the lithium metal oxide may include a nickel-based lithium metal oxide.

As the application range of lithium secondary batteries expands, longer life, higher capacity, and operational stability are required. Accordingly, a lithium secondary battery that provides uniform output and capacity even during repeated charging and discharging is desirable.

However, according to the repeated charging and discharging, the output and capacity may be decreased due to damage to the surface of the nickel-based lithium metal oxide used as a cathode active material, and a side reaction between the nickel-based lithium metal oxide and the electrolyte may occur. In particular, the lithium secondary battery is placed in a high-temperature environment during repetitive charging/discharging and overcharging. In this case, the above-described problems are accelerated, such that a swelling phenomenon of the battery (an increase in the battery thickness due to gases generated inside the battery), an increase in the internal resistance of the battery, a deterioration in lifespan characteristics of the battery, and the like are caused.

[Summary of Invention]

[Problems to be Solved by Invention]

An object of the present invention is to provide an electrolyte for a lithium secondary battery having excellent high-temperature characteristics and other performances (e.g., initial resistance, rapid charge performance, room-temperature capacity characteristics, etc.).

Another object of the present invention is to provide a lithium secondary battery having excellent high-temperature characteristics and other performances (e.g., initial resistance, rapid charge performance, room-temperature capacity characteristics, etc.).

[Means for Solving Problems]

To achieve the above object, according to an aspect of the present invention, there is provided an electrolyte for a lithium secondary battery including: an additive which includes a compound represented by Formula 1 below; an organic solvent; and a lithium salt:

[Formula 1]

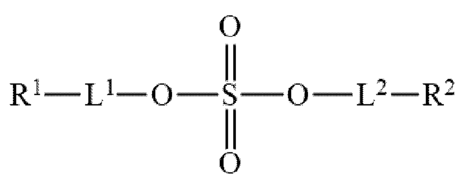

In Formula 1, In Formula 1, $R^1$ and $R^2$ may each independently be a substituted or unsubstituted $C_2$-$C_8$ cyclic ether group, and $L^1$ and $L^2$ may each independently be a substituted or unsubstituted $C_1$-$C_5$ alkylene group.
In one embodiment, $R^1$ and $R^2$ may each independently be an unsubstituted $C_2$-$C_5$ cyclic ether group, and $L^1$ and $L^2$ are each independently an unsubstituted $C_1$-$C_3$ alkylene group.
In one embodiment, $R^1$ and $R^2$ may each independently be an unsubstituted $C_4$ cyclic ether group, and $L^1$ and $L^2$ may each independently be an unsubstituted $C_1$ alkylene group.
In one embodiment, the additive may be included in an amount of 0.1 to 5% by weight based on a total weight of the electrolyte.
In one embodiment, the additive may be included in an amount of 0.2 to 2% by weight based on a total weight of the electrolyte.
In one embodiment, the organic solvent may include a linear carbonate solvent and a cyclic carbonate solvent.
In one embodiment, the electrolyte may further include at least one auxiliary additive selected from the group consisting of a cyclic carbonate compound, a fluorine-substituted carbonate compound, a sultone compound, a cyclic sulfate compound and a phosphate compound.
In one embodiment, the auxiliary additive may be included in an amount of 0.05 to 10% by weight based on a total weight of the electrolyte.
In one embodiment, the auxiliary additive may be included in an amount of 0.1 to 5% by weight based on the total weight of the electrolyte.
In one embodiment, a ratio of a weight of the auxiliary additive to a weight of the additive in the electrolyte may be 0.1 to 10.
According to another aspect of the present invention, there is provided a lithium secondary battery including an electrode assembly in which a plurality of cathodes and a plurality of anodes are repeatedly stacked; a case in which the electrode assembly is housed; and the electrolyte for a lithium secondary battery housed in the case together with the electrode assembly.

[Advantageous effects]

The electrolyte including an additive for the electrolyte for a lithium secondary battery according to exemplary embodiments may form a robust solid electrolyte interphase (SEI) on the surface of an electrode.
Accordingly, it is possible to implement a lithium secondary battery having improved high-temperature storage characteristics (e.g., improved capacity retention rate, and effects of preventing increases in resistance and thickness of the battery at a high temperature).
The electrolyte for a lithium secondary battery according to exemplary embodiments may also implement a lithium secondary battery having improved other characteristics (e.g., decreased initial resistance, and effects of improving rapid charge lifespan capacity retention rate, low-temperature capacity, and lifespan capacity retention rate at 25°C).

[Brief Description of Drawings]

FIG. 1 is a plan view schematically illustrating a lithium secondary battery according to exemplary embodiments.
FIG. 2 is a cross-sectional view schematically illustrating a lithium secondary battery according to exemplary embodiments.
FIG. 3 is a graph illustrating H-NMR results of an additive represented by Formula 1-1 according to an embodiment.

[Mode for Carrying out Invention]

As used herein, the "X compound" may refer to a compound including an X unit attached to a matrix, etc. of the "X compound" and a derivative thereof.
As used herein, the "$C_a$-$C_b$" may refer to "the number of carbon (C) atoms of a to b."

**<Electrolyte for a lithium secondary battery>**

An electrolyte for a lithium secondary battery according to exemplary embodiments may include: a lithium salt; an organic solvent; and an additive including a compound represented by Formula 1 below.
The electrolyte for a lithium secondary battery according to exemplary embodiments may implement a lithium secondary battery having excellent high-temperature characteristics and other characteristics.

Hereinafter, components of the present invention will be described in more detail.

## Additive

The electrolyte for a lithium secondary battery according to exemplary embodiments may include an additive including a compound represented by Formula 1 below.

[Formula 1]

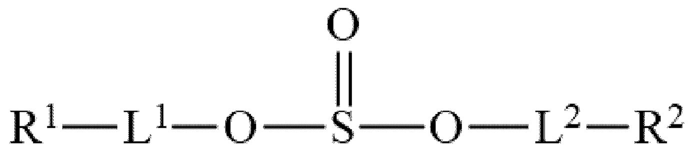

In Formula 1, $R^1$ and $R^2$ are independently from each other, and may be the same as or different from each other.
For example, $R^1$ may be a substituted or unsubstituted $C_2$-$C_8$ cyclic ether group. Preferably, $R^1$ is an unsubstituted $C_2$-$C_5$ cyclic ether group, and more preferably, an unsubstituted $C_4$ cyclic ether group.
For example, $R^2$ may be a substituted or unsubstituted $C_2$-$C_8$ cyclic ether group. Preferably, $R^1$ is an unsubstituted $C_2$-$C_5$ cyclic ether group, and more preferably, an unsubstituted $C_4$ cyclic ether group.
For example, $R^1$ and $R^2$ are independently from each other, and may be the same as or different from each other.
For example, $L^1$ may be a substituted or unsubstituted $C_1$-$C_5$ alkylene group. Preferably, $L^1$ is an unsubstituted $C_1$-$C_3$ alkylene group, and more preferably $L^1$ is an unsubstituted $C_1$ alkylene group.
For example, the cyclic ether group may mean a heterocyclic compound having an ether bond in a ring formed of an alkyl group.
For example, assuming that one hydrogen atom is removed from alkane ($C_nH_{2n+2}$), the alkyl group may mean a partial structure remaining. For example, $CH_3$-$CH_2$-$CH_2$- may mean a propyl group.
For example, the alkylene group may mean a form in which one hydrogen atom is separated from each of carbon atoms at both ends of the alkane (-$C_nH_{2n}$-). For example, - $CH_2$-$CH_2$-$CH_2$- may mean a propylene group.
For example, the ether may mean a compound in which two carbons are bonded to the same oxygen atom. For example, $CH_3$-O-$CH_3$ may mean dimethyl ether.
For example, the meaning of "substituted" may mean that a hydrogen atom of the alkylene group is substituted with a substituent, such that the substituent can be further bonded to a carbon atom of the alkylene group. For example, the substituent may be at least one of halogen, a $C_1$-$C_6$ alkyl group, a $C_2$-$C_6$ alkenyl group, an amino group, a $C_1$-$C_6$ alkoxy group, a $C_3$-$C_7$ cycloalkyl group, and a 5- to 7-membered heterocycloalkyl group. In some embodiments, the substituent may be halogen or a $C_1$-$C_6$ alkyl group.
When the electrolyte for a secondary battery includes the additive including the compound represented by Formula 1 above, a film having a relatively reduced resistance may be formed on an electrode through a decomposition reaction of the cyclic ether group, for example. Preferably, an SEI may be formed on an anode. Therefore, decomposition of the organic solvent may be effectively prevented, and gas generation and an increase in battery thickness may be significantly reduced. In addition, a film having a relatively reduced resistance may prevent an initial resistance from increasing, which may significantly improve rapid charging performance by increasing the mobility of lithium ions ions. In other words, when the electrolyte for a secondary battery includes the additive including the compound represented by Formula 1 above, room-temperature characteristics, rapid charging characteristics and initial resistance characteristics may be improved together with the high-temperature storage characteristics.
In one embodiment, the compound represented by Formula 1 above may include bis((tetrahydrofuran-2-yl) methyl) sulfite. For example, bis((tetrahydrofuran-2-yl)methyl) sulfite may be represented by Formula 1-1 below.

[Formula 1-1]

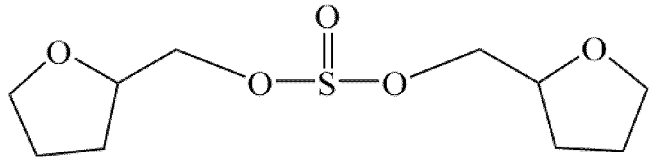

For example, when including bis((tetrahydrofuran-2-yl)methyl) sulfite as an electrolyte additive for a secondary battery, a stable SEI film may be formed on the anode by the sulfite group, thereby implementing a lithium secondary battery having improved high-temperature storage characteristics. In addition, decomposition of the electrolyte due to a reaction between the electrolyte and the anode may be suppressed, thereby reducing the gas generation.
In particular, the formation of a film having a relatively reduced resistance may be induced through a decomposition reaction of the cyclic ether group, thereby improving other characteristics together, such as initial resistance value, rapid charging characteristics, room-temperature lifespan and low-temperature characteristics compared to existing additives which provide high-temperature storage characteristics.
In one embodiment, in consideration of the implementation of sufficient passivation and the formation of stable SEI film, a content of the additive may be adjusted to 0.1% by weight ("wt%") or more, 0.2 wt% or more, 0.3 wt% or more, 0.4 wt% or more, 0.5 wt%, or 1 wt% or more based on a total weight of the electrolyte. In addition, in consideration of the movement of lithium ions and the activity of active material in the electrolyte, the content of the additive may be adjusted to 10 wt% or less, 9 wt% or less, 7 wt% or less, 6 wt% or less, 5 wt% or less, 4.5 wt% or less, 4 wt% or less, 3.5 wt% or less, 3 wt% or less, or 2 wt% or less based on the total weight of the electrolyte.
In a preferred embodiment, the content of the additive may be 0.1 to 5 wt%, and more preferably 0.2 to 2 wt%. Within the above range, the passivation of the above-described anode may be sufficiently implemented, and the excellent capacity retention rate and the effects of preventing increases in battery thickness and resistance at a high temperature may be achieved without excessively inhibiting the movement of lithium ions and the activity of a cathode active material.

## Auxiliary additive

The electrolyte for a lithium secondary battery according to exemplary embodiments may further include an auxiliary additive in addition to the above-described additive.
In one embodiment, the auxiliary additive may include, for example, a cyclic carbonate compound, a fluorine-substituted carbonate compound, a sultone compound, a cyclic sulfate compound and a phosphate compound.
In one embodiment, a content of the auxiliary additive may be adjusted to, for example, 10 wt% or less, 9 wt% or less, 8 wt% or less, 7 wt% or less, 6 wt% or less, 5 wt% or less, 4 wt% or less, 3 wt% or less, 2 wt% or less, or 1 wt% or less based on a total weight of the non-aqueous electrolyte, in consideration of the action with a main additive including the compound represented by Formula 1. In addition, the content of the auxiliary additive may be adjusted to 0.01 wt% or more, 0.02 wt% or more, 0.03 wt% or more, 0.05 wt% or more, 0.1 wt% or more, 0.2 wt% or more, 0.3 wt% or more, 0.4 wt% or more, or 0.5 wt% or more in consideration of the stabilization of the SEI film.
Preferably, the auxiliary additive may be included in an amount of about 0.05 to 10 wt%, and more preferably 0.1 to 5 wt% based on the total weight of the non-aqueous electrolyte. Within the above range, it is possible to enhance durability of an electrode protective film, and help to improve high-temperature storage characteristics and other characteristics without inhibiting the role of the main additive.
In one embodiment, a ratio of a weight of the auxiliary additive to a weight of the additive in the electrolyte may be 0.1 to 10, greater than 1 and 10 or less, or 5 to 10 or less. In this case, due to an interaction between the main additive and the auxiliary additive, a lithium secondary battery having more improved cycle characteristics together with high-temperature storage characteristics may be implemented.
The cyclic carbonate compound may include vinylene carbonate (VC), vinyl ethylene carbonate (VEC), etc.
The fluorine-substituted cyclic carbonate compound may include fluoroehtylene carbonate (FEC).
The sultone compound may include 1,3-propane sultone, 1,3-propene sultone, 1,4-butane sultone, etc.
The cyclic sulfate compound may include 1,2-ethylene sulfate, 1,2-propylene sulfate, etc.
The phosphate compound may include lithium bis(oxalato)phosphate as an oxalatophosphate compound.
In a preferred embodiment, as the auxiliary additive, the fluorine-substituted cyclic carbonate compound, the sultone compound, the cyclic sulfate compound and the oxalatophosphate compound may be used together.
When adding the auxiliary additive, durability and stability of the electrode may be further enhanced. The auxiliary additive may be included in an appropriate amount within a range that does not inhibit the movement of lithium ions in the electrolyte.

## Organic solvent and lithium salt

The organic solvent may include, for example, an organic compound which has sufficient solubility to the lithium salt, the additive, and the auxiliary additive, and does not have reactivity in the battery.
For example, the organic solvent may include at least one of a carbonate solvent, an ester solvent, an ether solvent, a ketone solvent, an alcohol solvent and an aprotic solvent.
In one embodiment, the organic solvent may include a carbonate solvent.
In some embodiments, the carbonate solvent may include a linear carbonate solvent and a cyclic carbonate

solvent.

For example, the linear carbonate solvent may include at least one of dimethyl carbonate (DMC), ethyl methyl carbonate (EMC), diethyl carbonate (DEC), methyl propyl carbonate, ethyl propyl carbonate and dipropyl carbonate.

For example, the cyclic carbonate solvent may include at least one of ethylene carbonate (EC), propylene carbonate (PC) and butylene carbonate.

In some embodiments, the organic solvent may include more of the linear carbonate solvent than the cyclic carbonate solvent based on the volume.

For example, a mixing volume ratio of the linear carbonate solvent and the cyclic carbonate solvent may be 1:1 to 9:1, and preferably 1.5:1 to 4:1.

For example, the ester solvent may include at least one of methyl acetate (MA), ethyl acetate (EA), n-propyl acetate (n-PA), 1,1-dimethylethyl acetate (DMEA), methyl propionate (MP) and ethyl propionate (EP).

For example, the ether solvent may include at least one of dibutyl ether, tetraethylene glycol dimethyl ether (TEGDME), diethylene glycol dimethyl ether (DEGDME), dimethoxyethane, tetrahydrofuran (THF) and 2-methyltetrahydrofuran.

For example, the ketone solvent may include cyclohexanone.

For example, the alcohol solvent may include at least one of ethyl alcohol and isopropyl alcohol.

For example, the aprotic solvent may include at least one of a nitrile solvent, an amide solvent (e.g., dimethylformamide), a dioxolane solvent (e.g., 1,3-dioxolane), and a sulfolane solvent

The electrolyte includes a lithium salt, and the lithium salt may be expressed as $Li^+X^-$.

For example, the anion (X-) of the lithium salt may be at least one of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In some embodiments, the lithium salt may include at least one of $LiBF_4$ and $LiPF_6$.

In one embodiment, the lithium salt may be included in a concentration of 0.01 to 5 M, and more preferably 0.01 to 2 M relative to the organic solvent. Within the above concentration range, lithium ions and/or electrons may smoothly move during charging and discharging of the battery.

**<Lithium secondary battery>**

A lithium secondary battery according to exemplary embodiments may include a cathode; an anode; a separation membrane interposed between the cathode and the anode; and an electrolyte including an organic solvent and a lithium salt.

Hereinafter, the lithium secondary battery according to exemplary embodiments will be described in more detail with reference to the drawings. FIGS. 1 and 2 are a schematic plan view and a cross-sectional view illustrating the lithium secondary battery according to exemplary embodiments, respectively. Specifically, FIG. 2 is a cross-sectional view taken on line I-I' in FIG. 1.

Referring to FIGS. 1 and 2, the lithium secondary battery may include a cathode 100 and an anode 130 disposed to face the cathode 100.

The cathode 100 may include a cathode current collector 105 and a cathode active material layer 110 on the cathode current collector 105.

For example, the cathode active material layer 110 may include a cathode active material, and if necessary, a cathode binder and a conductive material.

For example, the cathode 100 may be prepared by mixing and stirring the cathode active material, the cathode binder, and the conductive material, etc. in a dispersion medium to prepare a cathode slurry, and then applying the cathode slurry to the cathode current collector 105, followed by drying and pressing the same.

For example, the cathode current collector 105 may include stainless steel, nickel, aluminum, titanium, copper, or an alloy thereof.

For example, the cathode active material may include lithium metal oxide particles capable of reversibly intercalating and deintercalating lithium ions.

In one embodiment, the cathode active material may include lithium metal oxide particles containing nickel.

In some embodiments, the lithium metal oxide particles may include 80 mol% or more of nickel based on a total number of moles of all elements except for lithium and oxygen. In this case, it is possible to implement a lithium secondary battery having a high capacity.

In some embodiments, the lithium metal oxide particles may include 83 mol% or more, 85 mol% or more, 90 mol% or more, or 95 mol% or more of nickel based on the total number of moles of all elements except for lithium and oxygen.

In some embodiments, the lithium metal oxide particles may further include at least one of cobalt and manganese.

In some embodiments, the lithium metal oxide particles may further include cobalt and manganese. In this case, it

is possible to implement a lithium secondary battery having excellent output characteristics and penetration stability.

In one embodiment, the lithium metal oxide particles may be represented by Formula 2 below.

[Formula 2] $Li_xNi_{(1-a-b)}Co_aM_bO_y$

For example, in Formula 2, M may be at least one of Al, Zr, Ti, Cr, B, Mg, Mn, Ba, Si, Y, W and Sr, and x, y, a and b may be in a range of $0.9 \leq x \leq 1.2$, $1.9 \leq y \leq 2.1$, and $0 \leq a+b \leq 0.5$, respectively.

In some embodiments, a+b may be in a range of $0<a+b \leq 0.4$, $0<a+b \leq 0.3$, $0<a+b \leq 0.2$, $0<a+b \leq 0.17$, $0<a+b \leq 0.15$, $0<a+b \leq 0.12$, or $0<a+b \leq 0.1$.

In one embodiment, the lithium metal oxide particles may further include a coating element or a doping element. For example, the coating element or the doping element may include Al, Ti, Ba, Zr, Si, B, Mg, P, Sr, W, La, or an alloy thereof, or an oxide thereof. In this case, it is possible to implement a lithium secondary battery having more improved lifespan characteristics.

For example, the cathode binder may include an organic binder such as polyvinylidene fluoride (PVDF), vinylidene fluoride-hexafluoropropylene copolymer (PVDF-co-HFP), polyacrylonitrile, polymethyl methacrylate, etc., or an aqueous binder such as styrene-butadiene rubber (SBR). In addition, for example, the cathode binder may be used together with a thickener such as carboxymethyl cellulose (CMC).

For example, the conductive material may include a carbon-based conductive material such as graphite, carbon black, graphene, and carbon nanotubes; or a metal-based conductive material including tin, tin oxide, titanium oxide, or a perovskite material such as $LaSrCoO_3$, and $LaSrMnO_3$.

For example, the anode 130 may include an anode current collector 125 and an anode active material layer 120 on the anode current collector 125.

For example, the anode active material layer 120 may include an anode active material, and if necessary, an anode binder and a conductive material.

For example, the anode 130 may be prepared by mixing and stirring the anode active material, the anode binder, the conductive material, etc. in a solvent to prepare an anode slurry, and then applying the anode slurry to the anode current collector 125, followed by drying and pressing the same.

For example, the anode current collector 125 may include gold, stainless steel, nickel, aluminum, titanium, copper or an alloy thereof, and preferably, includes copper or a copper alloy.

For example, the anode active material may be a material capable of intercalating and deintercalating lithium ions. For example, the anode active material may include a lithium alloy, a carbon-based active material, a silicon-based active material and the like.

For example, the lithium alloy may include aluminum, zinc, bismuth, cadmium, antimony, silicon, lead, tin, gallium, indium and the like.

For example, the carbon-based active material may include crystalline carbon, amorphous carbon, carbon composite, carbon fiber and the like.

For example, the amorphous carbon may include hard carbon, cokes, mesocarbon microbead (MCMB) calcined at 1500°C or lower, mesophase pitch-based carbon fiber (MPCF) or the like. For example, the crystalline carbon may include natural graphite, graphite cokes, graphite MCMB, graphite MPCF and the like.

In one embodiment, the anode active material may include a silicon-based active material. For example, the silicon-based active material may include Si, $SiO_x$ ($0<x<2$), Si/C, SiO/C, Si-metal and the like. In this case, it is possible to implement a lithium secondary battery having a high capacity.

For example, when the anode active material includes the silicon-based active material, there may be a problem in that a thickness of the battery is increased during repeated charging and discharging. The lithium secondary battery according to exemplary embodiments may include the above-described electrolyte to relieve a thickness increase rate of the battery.

In some embodiments, a content of the silicon active material in the anode active material may be included in an amount of 1 to 20 wt%, 1 to 15 wt%, or 1 to 10 wt%.

The anode binder and the conductive material may be substantially the same as or similar to the above-described cathode binder and the conductive material. For example, the anode binder may be an aqueous binder such as styrene-butadiene rubber (SBR). In addition, for example, the anode binder may be used together with a thickener such as carboxymethyl cellulose (CMC).

In one embodiment, a separation membrane 140 may be interposed between the cathode 100 and the anode 130.

In some embodiments, the anode 130 may have an area greater than that of the cathode 100. In this case, lithium ions generated from the cathode 100 may smoothly move to the anode 130 without precipitation in the middle.

For example, the separation membrane 140 may include a porous polymer film made of a polyolefin polymer such as ethylene homopolymer, propylene homopolymer, ethylene/butene copolymer, ethylene/hexene copolymer, ethylene/methacrylate copolymer or the like. Alternatively, for example, the separation membrane 140 may include a nonwoven fabric made of glass fiber having a high melting point, polyethylene terephthalate fiber or the like.

For example, an electrode cell may be formed including the cathode 100, the anode 130 and the separation membrane 140.

For example, a plurality of electrode cells may be stacked to form an electrode assembly 150. For example, the electrode assembly 150 may be formed by winding, lamination, z-folding, etc. of the separation membrane 140.

The lithium secondary battery according to exemplary embodiments may include: a cathode lead 107 connected to the cathode 100 and protruding to an outside of a case 160; and an anode lead 127 connected to the anode 130 and protruding to the outside of the case 160.

For example, the cathode 100 and the cathode lead 107 may be electrically connected with each other. Similarly, the anode 130 and the anode lead 127 may be electrically connected with each other.

For example, the cathode lead 107 may be electrically connected to the cathode current collector 105. In addition, the anode lead 130 may be electrically connected to the anode current collector 125.

For example, the cathode current collector 105 may include a protrusion part (cathode tab, not illustrated) on one side. The cathode active material layer 110 may not be formed on the cathode tab. The cathode tab may be formed integrally with the cathode current collector 105 or may be connected thereto by welding or the like. The cathode current collector 105 and the cathode lead 107 may be electrically connected with each other through the cathode tab.

Similarly, the anode current collector 125 may include a protrusion part (anode tab, not illustrated) on one side. The anode active material layer 120 may not be formed on the anode tab. The anode tab may be formed integrally with the anode current collector 125 or may be connected thereto by welding or the like. The anode current collector 125 and the anode lead 127 may be electrically connected with each other through the anode tab.

In one embodiment, the electrode assembly 150 may include a plurality of cathodes and a plurality of anodes. For example, the plurality of cathodes and anodes may be disposed alternately with each other, and the separation membranes may be interposed between the cathodes and the anodes. Accordingly, the lithium secondary battery according to an embodiment of the present invention may include a plurality of cathode tabs and a plurality of anode tabs protruding from each of the plurality of cathodes and the plurality of anodes.

In one embodiment, the cathode tabs (or, the anode tabs) may be stacked, compressed, and welded to form a cathode tab laminate (or, an anode tab laminate). The cathode tab laminate may be electrically connected to the cathode lead 107. In addition, the anode tab laminate may be electrically connected to the anode lead 127.

For example, the electrode assembly 150 may be housed in the case 160 together with the above-described electrolyte to form a lithium secondary battery.

The lithium secondary battery may be manufactured, for example, in a cylindrical shape, a square shape, a pouch type, a coin shape or the like.

Hereinafter, preferred examples of the present invention and comparative examples will be described. However, the following examples are only preferred examples of the present invention, and the present invention is not limited thereto.

<Examples and Comparative Examples>

**(1) Synthesis Example of additive (Formula 1-1)**

Dichloromethane (100 mL), tetrahydrofurfuryl alcohol (25.7 g, 252 mmol), and triethylamine (25.6 g, 253 mmol) were sequentially input into a round bottom flask, followed by cooling the same to 0°C. Thionyl chloride (9.15 mL, 126 mmol) was slowly added to the mixture for 2 hours, and after the addition was completed, the temperature was increased to room temperature, and then the mixture was additionally stirred for 2 hours. After the reaction was completed, the reaction mixture was slowly added dropwise to 50 mL of a saturated ammonium chloride aqueous solution to separate an organic layer, and the production mixture was washed twice with 50 mL of distilled water. The solvent in the organic layer, from which moisture was removed by performing sodium sulfate treatment, was dried and then purified through a silica column to obtain 24 g of a pale yellow liquid (bis((tetrahydrofuran-2-yl)methyl) sulfite) (yield 76%). H-NMR results for the obtained compound are as follows, and H-NMR results are shown by a graph in FIG. 3.

1H-NMR(CDCl3, 600 MHz): 4.11(m, 2H), 4.07(d, 1H), 3.98(d, 2H), 3.85(m, 3H), 3.77(q, 2H), 1.98(m, 2H), 1.88(m, 4H), 1.66(m, 2H)

**(2) Preparation of electrolyte**

A 1 M $LiPF_6$ solution (a mixed solvent of EC/EMC in a volume ratio of 25:75) was prepared.

Electrolytes of the examples and comparative examples were prepared by adding additives and auxiliary additives in the contents (wt%) described in Table 1 below to the $LiPF_6$ solution based on the total weight of the electrolyte,

and mixing with each other.

**(3) Preparation of lithium secondary battery sample**

A cathode slurry was prepared by mixing and dispersing a cathode active material of $Li[Ni_{c.8}Co_{0.1}Mn_{0.1}]O_2$, carbon black, and polyvinylidene fluoride (PVDF) in NMP in a weight ratio of 98:1:1.

The cathode slurry was uniformly applied to an aluminum foil having a thickness of 12 μm, followed by drying and pressing the same to prepare a cathode.

An anode slurry was prepared by mixing and dispersing an anode active material in which artificial graphite and natural graphite are mixed in a weight ratio of 7:3, a conductive material, styrene-butadiene rubber (SBR) and carboxymethyl cellulose (CMC) in water in a weight ratio of 96:3:1:1. The anode slurry was uniformly applied to a copper foil having a thickness of 8 μm, followed by drying and pressing the same to prepare an anode.

An electrode assembly was manufactured by repeatedly stacking the prepared cathodes and anodes alternately, with a separator (thickness 13 μm, polyethylene film) interposed between the cathode and the anode.

The electrode assembly was placed in a pouch, the electrolyte prepared in (2) above was injected, sealed, and impregnated for 12 hours to manufacture a lithium secondary battery.

[TABLE 1]

| | Additive | Auxiliary additive (wt%) | | |
|---|---|---|---|---|
| | | FEC | PS | PRS |
| Example 1 | BHFSa, 0.2 wt% | 1 | 0.5 | - |
| Example 2 | BHFSa, 0.5 wt% | 1 | 0.5 | - |
| Example 3 | BHFSa 1.0 wt% | 1 | 0.5 | - |
| Example 4 | BHFSa 2.0 wt% | 1 | 0.5 | - |
| Comparative Example 1 | - | 1 | 0.5 | 0.5 |
| Comparative Example 2 | - | 1 | 0.5 | - |

The components described in Table 1 are as follows:

BHFSi: Bis((tetrahydrofuran-2-yl)methyl) sulfite
FEC: Fluoro ethylene carbonate
PS: 1,3-Propane sultone
PRS: Prop-1-ene-1,3-sultone

**<Experimental Example>**

**(1) High-temperature storage characteristics**

**(1-1) Measurement of capacity retention rate (Ret) after high-temperature storage**

The lithium secondary batteries of the examples and comparative examples were subjected to 0.5C CC/CV charge (4.2 V, 0.05C CUT-OFF) and 0.5C CC discharge (2.7 V CUT-OFF) at 25°C three times, and discharge capacities C1 at the third cycle were measured. The charged lithium secondary batteries were stored at 60°C for 12 weeks, then additionally left at room temperature for 30 minutes, and subjected to 0.5C CC discharge (2.75 V CUT-OFF), then discharge capacities C2 were measured. The capacity retention rate was calculated by the following equation and results thereof are described in Table 2 below.

$$\text{Capacity retention rate (\%)} = C2/C1 \times 100\ (\%)$$

**(1-2) Measurement of internal resistance (DCIR) increase rate after high-temperature storage**

The lithium secondary batteries of the examples and comparative examples were subjected to 0.5C CC/CV charge (4.2 V 0.05C CUT-OFF) at room temperature at 25°C, and then 0.5C CC discharge up to state-of-charge (SOC) 60.

At SOC 60 point, the lithium secondary batteries were discharged and supplementary charged for 10 seconds, respectively, while changing C-rate to 0.2C 0.5C, 1C, 1.5C, 2C and 2.5C, then DCIRs R1 were measured. The charged lithium secondary batteries of the examples and comparative examples were left at 60°C for 12 weeks under a condition of being exposed to the atmosphere, followed by additionally leaving at room temperature for 30 minutes, then DCIRs R2 were measured by the same method as described above. The internal resistance increase rate was calculated by the following equation, and result values are described in Table 2 below.

$$\text{Internal resistance increase rate (\%)} = (R2-R1)/R1 \times 100\ (\%)$$

**(1-3) Measurement of battery thickness after high-temperature storage**

The lithium secondary batteries of the examples and comparative examples were subjected to 0.5C CC/CV charge (4.2 V 0.05C CUT-OFF) at 25°C, then battery thicknesses T1 were measured.

After leaving the charged lithium secondary batteries of the examples and comparative example under the condition of being exposed to the atmosphere at 60 °C for 12 weeks (using a thermostatic device), battery thicknesses T2 were measured. The battery thickness was measured using a plate thickness measuring device (Mitutoyo, 543-490B). The battery thickness increase rate was calculated by the following equation, and result values are described in Table 2 below.

$$\text{Battery thickness increase rate (\%)} = (T2-T1)/T1 \times 100\ (\%)$$

**(2) Measurement of initial resistance**

The lithium secondary batteries of the examples and comparative examples were subjected to 0.5C CC/CV charge (4.2 V 0.05C CUT-OFF) at room temperature (25°C), and then 0.5C CC discharge up to SOC 60. At SOC 60 point, the lithium secondary batteries were discharged and supplementary charged for 10 seconds, respectively, while changing C-rate to 0.2C 0.5C, 1C, 1.5C, 2C and 2.5C, then initial DCIRs were measured and results thereof are shown in Table 3 below.

**(3) Measurement of rapid charge lifespan capacity retention rate**

The lithium secondary batteries of the examples and comparative examples were charged at 0.33C up to state of charge (SOC) 8%, then charged at 2.5C-2.25C-2C-1.75C-1.5C-1.0C stage by stage in a section of SOC 8-80%, and again charged at 0.33C (4.2 V, 0.05C cut-off) in the section of SOC 8-100%, and then CC discharged at 0.33C up to 2.7 V.

Discharge capacities A1 at the first cycle were measured, and the charge and discharge were repeated 100 times, then discharge capacities A2 at the 100th cycle were measured.

The rapid charge capacity retention rate was calculated as the following equation and results thereof are shown in Table 3 below.

$$\text{Rapid charge capacity retention rate (\%)} = A2/A1 \times 100\ (\%)$$

**(4) Measurement of low-temperature capacity**

The lithium secondary batteries of the examples and comparative examples were subjected to 0.5C CC/CV charge (4.2 V, 0.05C CUT-OFF) at 25°C, then left at -10°C for 4 hours, followed by 0.5C CC discharge (2.7 V CUT-OFF), and then discharge capacities (mAh) were measured and results thereof are shown in Table 3 below.

**(5) Measurement of lifespan capacity retention rate at 25°C**

The lithium secondary batteries of the examples and comparative examples were subjected to 0.5C CC/CV charge (4.2 V, 0.05C CUT-OFF) and 0.5C CC discharge (2.7 V CUT-OFF) at 25°C 500 times. At this time, the discharge capacity at the first cycle is referred to as C, and the lifespan capacity retention rate was determined by dividing the discharge capacity at the 500th cycle by the discharge capacity at the first cycle and results thereof are shown in Table 3 below.

[TABLE 2]

| | High-temperature storage performance | | |
|---|---|---|---|
| | Ret. (%) | DCIR increase rate (%) | Thickness increase rate (%) |
| Example 1 | 88.0 | 105.4 | 83.6 |
| Example 2 | 88.3 | 103.1 | 77.7 |
| Example 3 | 89.2 | 107.8 | 60.2 |
| Example 4 | 89.3 | 111.1 | 65.2 |
| Comparative Example 1 | 88.2 | 108.6 | 96.2 |
| Comparative Example 2 | 86.1 | 115.5 | 116.4 |

[TABLE 3]

| | Other performances | | | |
|---|---|---|---|---|
| | Initial DCIR (mQ) | Rapid charge lifespan capacity retention rate (%, 100 cycles) | Low-temperature capacity (%) | Lifespan capacity retention rate at 25°C (%) |
| Example 1 | 35.8 | 95.0 | 1530 | 90.7 |
| Example 2 | 37.3 | 92.1 | 1510 | 91.1 |
| Example 3 | 38.0 | 93.2 | 1508 | 91.9 |
| Example 4 | 40.3 | 92.9 | 1467 | 88.9 |
| Comparative Example 1 | 40.5 | 90.3 | 1399 | 86.8 |
| Comparative Example 2 | 35.9 | 94.8 | 1525 | 90.8 |

As can be confirmed from Table 2 above, the lithium secondary batteries of the examples exhibited excellent results in the evaluation of high-temperature storage performance (capacity retention rate, resistance increase rate and thickness increase rate).

As can be confirmed from Table 3 above, the lithium secondary batteries of the examples exhibited excellent results in terms of other performances (initial resistance, rapid charge lifespan capacity retention rate, low-temperature capacity, and room-temperature lifespan capacity retention rate).

In addition, when comparing Comparative Example 1 and Comparative Example 2, it can be seen that the high-temperature characteristics are improved when including PRS, but the other performances are deteriorated. However, it can be confirmed that the examples might improve other performances together with the high-temperature storage performance.

## Claims

**1.** An electrolyte for a lithium secondary battery comprising:

an additive which comprises a compound represented by Formula 1 below;
an organic solvent; and
a lithium salt:

[Formula 1]

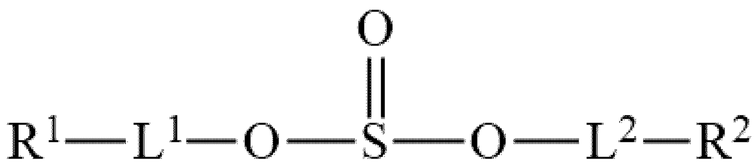

(in Formula 1, $R^1$ and $R^2$ are each independently a substituted or unsubstituted $C_2$-$C_8$ cyclic ether group, and $L^1$ and $L^2$ are each independently a substituted or unsubstituted $C_1$-$C_5$ alkylene group).

**2.** The electrolyte for a lithium secondary battery according to claim 1, wherein $R^1$ and $R^2$ are each independently an unsubstituted $C_2$-$C_5$ cyclic ether group, and $L^1$ and $L^2$ are each independently an unsubstituted $C_1$-$C_3$ alkylene group.

**3.** The electrolyte for a lithium secondary battery according to claim 1, wherein $R^1$ and $R^2$ are each independently an unsubstituted $C_4$ cyclic ether group, and $L^1$ and $L^2$ are each independently an unsubstituted $C_1$ alkylene group.

**4.** The electrolyte for a lithium secondary battery according to claim 1, wherein the additive is included in an amount of 0.1 to 5% by weight based on a total weight of the electrolyte.

**5.** The electrolyte for a lithium secondary battery according to claim 1, wherein the additive is included in an amount of 0.2 to 2% by weight based on a total weight of the electrolyte.

**6.** The electrolyte for a lithium secondary battery according to claim 1, wherein the organic solvent includes a linear carbonate solvent and a cyclic carbonate solvent.

**7.** The electrolyte for a lithium secondary battery according to claim 1, further comprising at least one auxiliary additive selected from the group consisting of a cyclic carbonate compound, a fluorine-substituted carbonate compound, a sultone compound, a cyclic sulfate compound and a phosphate compound.

**8.** The electrolyte for a lithium secondary battery according to claim 7, wherein the auxiliary additive is included in an amount of 0.05 to 10% by weight based on a total weight of the electrolyte.

**9.** The electrolyte for a lithium secondary battery according to claim 7, wherein the auxiliary additive is included in an amount of 0.1 to 5% by weight based on the total weight of the electrolyte.

**10.** The electrolyte for a lithium secondary battery according to claim 7, wherein a ratio of a weight of the auxiliary additive to a weight of the additive in the electrolyte is 0.1 to 10.

**11.** A lithium secondary battery comprising an electrode assembly in which a plurality of cathodes and a plurality of anodes are repeatedly stacked;

a case in which the electrode assembly is housed; and
the electrolyte for a lithium secondary battery according to claim 1 housed in the case together with the electrode assembly.

[FIG. 1]

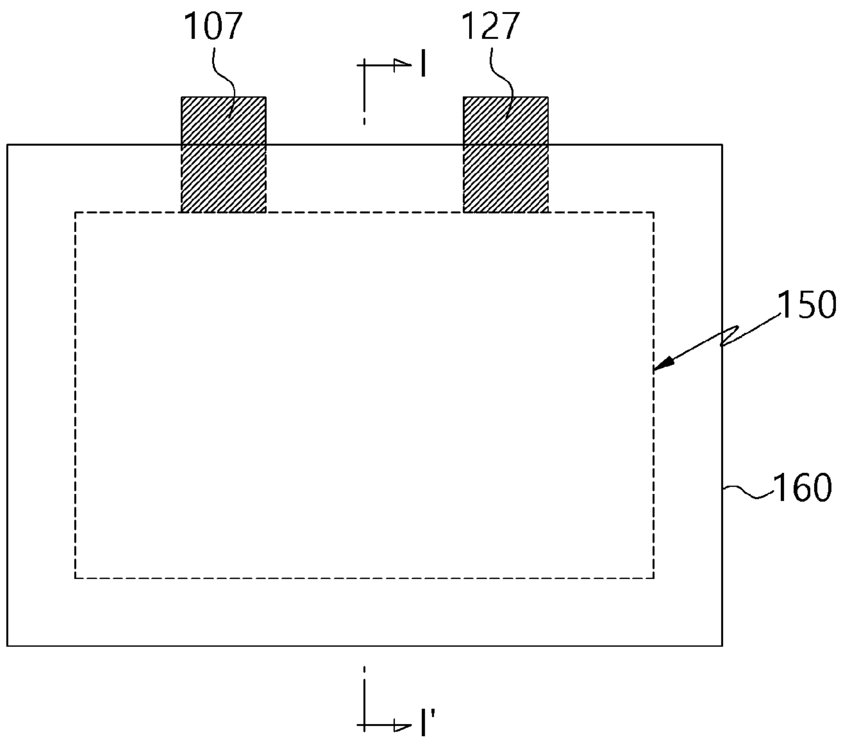


[FIG. 2]

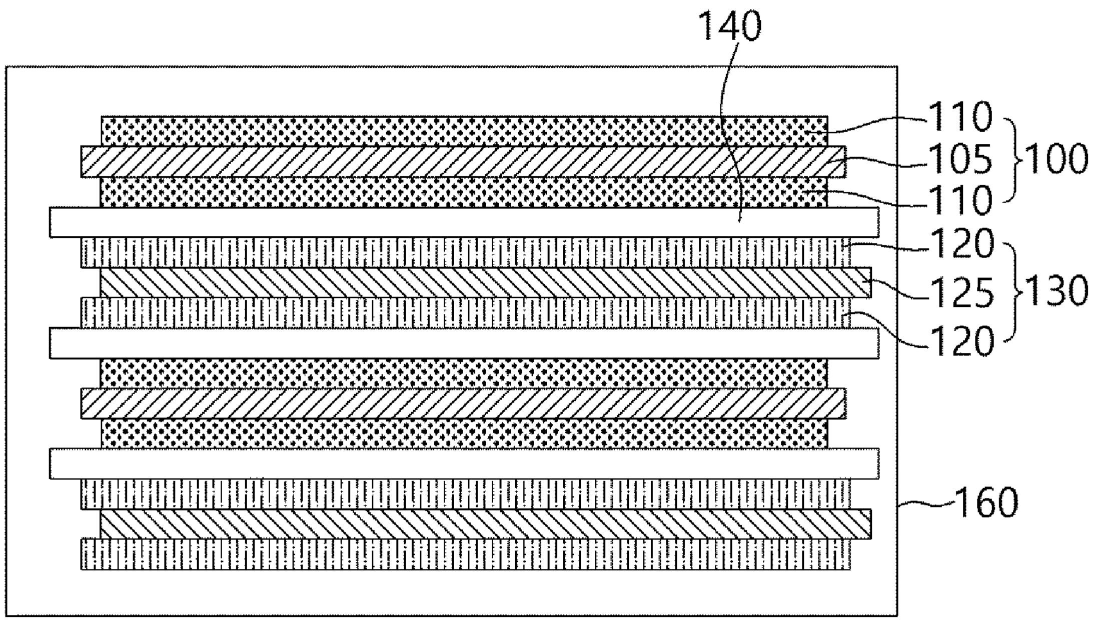

[FIG. 3]

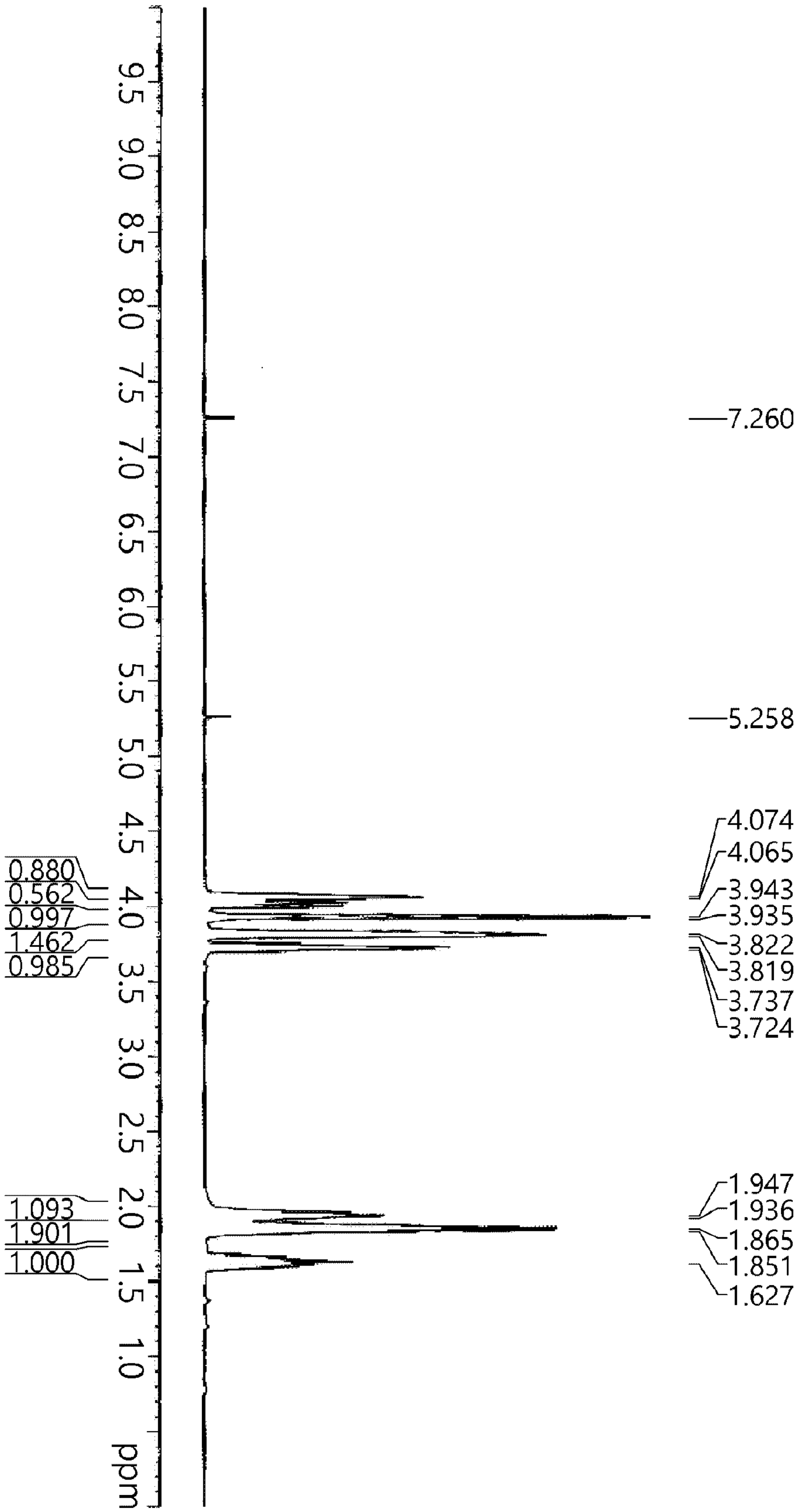
9.5
9.0
8.5
8.0
7.5
7.0
6.5
6.0
5.5
5.0
4.5
4.0
3.5
3.0
2.5
2.0
1.5
1.0
ppm
7.260
5.258
4.074
4.065
3.943
3.935
3.822
3.819
3.737
3.724
1.947
1.936
1.865
1.851
1.627
0.880
0.562
0.997
1.462
0.985
1.093
1.901
1.000

**INTERNATIONAL SEARCH REPORT**

International application No.
**PCT/KR2023/006459**

**A. CLASSIFICATION OF SUBJECT MATTER**

**H01M 10/0567**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); H01M 10/0525(2010.01); H01M 10/0569(2010.01); H01M 10/36(2006.01); H01M 10/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 이차전지(lithium secondary battery), 비수 전해액(non-aqueous electrolyte), 첨가제(additive), 설파이트계 화합물(sulfite-based compound), 고리형 에테르기(cyclic ether group), 고온(high temperature)

**C. DOCUMENTS CONSIDERED TO BE RELEVANT**

| Category* | Citation of document, with indication, where appropriate, of the relevant passages | Relevant to claim No. |
|---|---|---|
| A | CN 102185156 A (BEIJING INSTITUTE OF TECHNOLOGY) 14 September 2011 (2011-09-14)<br>See claim 1; paragraph [0046]; and example 12. | 1-11 |
| A | CROMBIE, L. et al. 26. Stereochemical studies of olefinic compounds. Part V. Further observations on the ring fission of 3-chlorotetrahydro-furans and –pyrans. Journal of the Chemical Society (Resumed). 1956, pp. 136-142.<br>See page 142. | 1-11 |
| A | US 6350542 B1 (GAN, H. et al.) 26 February 2002 (2002-02-26)<br>See entire document. | 1-11 |
| A | EP 1744394 A1 (MITSUBISHI CHEMICAL CORPORATION) 17 January 2007 (2007-01-17)<br>See entire document. | 1-11 |
| A | KR 10-2271011 B1 (GOTION, INC.) 29 June 2021 (2021-06-29)<br>See entire document. | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 August 2023** | **07 August 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/006459**

| Patent document cited in search report | | | Publication date (day/month/year) | Patent family member(s) | | | Publication date (day/month/year) |
|---|---|---|---|---|---|---|---|
| CN | 102185156 | A | 14 September 2011 | None | | | |
| US | 6350542 | B1 | 26 February 2002 | CA | 2299102 | A1 | 24 July 2001 |
| | | | | CA | 2299102 | C | 20 September 2005 |
| | | | | EP | 1022799 | A2 | 26 July 2000 |
| | | | | EP | 1022799 | A3 | 02 August 2000 |
| | | | | IL | 140251 | A | 10 February 2002 |
| | | | | JP | 2000-294282 | A | 20 October 2000 |
| | | | | KR | 10-2001-0074419 | A | 04 August 2001 |
| | | | | TW | 474041 | B | 21 January 2002 |
| | | | | US | 6403256 | B1 | 11 June 2002 |
| EP | 1744394 | A1 | 17 January 2007 | CN | 100544109 | C | 23 September 2009 |
| | | | | CN | 101609911 | A | 23 December 2009 |
| | | | | CN | 101609911 | B | 18 May 2011 |
| | | | | CN | 101894973 | A | 24 November 2010 |
| | | | | CN | 101894973 | B | 18 June 2014 |
| | | | | CN | 102208681 | A | 05 October 2011 |
| | | | | CN | 102208681 | B | 21 November 2012 |
| | | | | CN | 102683748 | A | 19 September 2012 |
| | | | | CN | 102683748 | B | 24 September 2014 |
| | | | | CN | 103928706 | A | 16 July 2014 |
| | | | | CN | 103928706 | B | 12 April 2017 |
| | | | | CN | 1943071 | A | 04 April 2007 |
| | | | | EP | 3249735 | A2 | 29 November 2017 |
| | | | | EP | 3249735 | A3 | 07 March 2018 |
| | | | | JP | 2005-310477 | A | 04 November 2005 |
| | | | | JP | 2006-012780 | A | 12 January 2006 |
| | | | | JP | 2006-049112 | A | 16 February 2006 |
| | | | | JP | 2006-049152 | A | 16 February 2006 |
| | | | | JP | 2006-059797 | A | 02 March 2006 |
| | | | | JP | 2006-114388 | A | 27 April 2006 |
| | | | | JP | 4608932 | B2 | 12 January 2011 |
| | | | | JP | 4655536 | B2 | 23 March 2011 |
| | | | | JP | 4655537 | B2 | 23 March 2011 |
| | | | | JP | 4670305 | B2 | 13 April 2011 |
| | | | | JP | 4894157 | B2 | 14 March 2012 |
| | | | | JP | 4910303 | B2 | 04 April 2012 |
| | | | | US | 2007-0224514 | A1 | 27 September 2007 |
| | | | | US | 2011-0070485 | A1 | 24 March 2011 |
| | | | | US | 2011-0300453 | A1 | 08 December 2011 |
| | | | | US | 2012-0244426 | A1 | 27 September 2012 |
| | | | | US | 2013-0095379 | A1 | 18 April 2013 |
| | | | | US | 2013-0196225 | A1 | 01 August 2013 |
| | | | | US | 8007938 | B2 | 30 August 2011 |
| | | | | US | 8043745 | B2 | 25 October 2011 |
| | | | | US | 8435681 | B2 | 07 May 2013 |
| | | | | US | 9136560 | B2 | 15 September 2015 |
| | | | | US | 9231274 | B2 | 05 January 2016 |
| | | | | WO | 2005-114773 | A1 | 01 December 2005 |
| KR | 10-2271011 | B1 | 29 June 2021 | CN | 105556728 | A | 04 May 2016 |
| | | | | CN | 105556728 | B | 02 June 2020 |

Form PCT/ISA/210 (patent family annex) (July 2022)

**INTERNATIONAL SEARCH REPORT**
**Information on patent family members**

International application No.
**PCT/KR2023/006459**

| Patent document cited in search report | Publication date (day/month/year) | Patent family member(s) | Publication date (day/month/year) |
|---|---|---|---|
| | | EP 3025389 A1 | 01 June 2016 |
| | | EP 3025389 B1 | 14 June 2017 |
| | | JP 2016-527682 A | 08 September 2016 |
| | | KR 10-2016-0033718 A | 28 March 2016 |
| | | US 2016-0172709 A1 | 16 June 2016 |
| | | US 9640839 B2 | 02 May 2017 |
| | | WO 2015-010931 A1 | 29 January 2015 |

Form PCT/ISA/210 (patent family annex) (July 2022)